# EUROPÄISCHE PATENTANMELDUNG

(11) **EP 1 176 056 A2**
(43) Veröffentlichungstag der Anmeldung: **30.01.2002**
(21) Anmeldenummer: 01116585.9
(22) Anmeldetag: 09.07.2001
(51) Int. Cl.: B60R 1/12

(54) **Rückspiegel, insbesondere für Nutzfahrzeuge mit Kamera und Monitor**

(30) Priorität: 28.07.2000 DE 10036875; 28.11.2000 DE 20020166 U
(71) Anmelder: MEKRA Lang GmbH & Co. KG, 90765 Fürth (DE)
(72) Erfinder: Lang, Heinrich, 91465 Ergersheim (DE); Witzke, Michael, 91522 Ansbach (DE)
(74) Vertreter: Winter, Brandl, Fürniss, Hübner, Röss, Kaiser, Polte Partnerschaft

(57) **Zusammenfassung**

Es wird ein Rückspiegel für Fahrzeuge bereitgestellt, bei dem eine optische Anzeigeeinrichtung in Form eines Monitors angeordnet ist. Der Monitor ist mit einer Kamera verbunden, die einen Sichtbereich vor, neben und/oder hinter dem Fahrzeug erfaßt.

## Beschreibung

Die Erfindung betrifft einen Rückspiegel für Fahrzeuge, insbesondere Nutzfahrzeuge mit einer optischen Anzeigeeinrichtung gemäß dem Oberbegriff des Anspruch 1.

Aus der US-PS-4,882,565 ist ein Rückspiegel für Fahrzeuge bekannt, bei dem in die Spiegelfläche Anzeigeelemente integriert sind, die von hinter der Spiegelfläche angeordneten Leuchtmitteln mit Licht beaufschlagt werden. Hierdurch können einfache Warnsignale oder stilisierte Darstellungen von verschiedenen Funktionseinheiten dargestellt und im Rückspiegel zur Anzeige gebracht werden. Bilder einer Kamera lassen sich hiermit nicht darstellen.

Beim Abbiegen mit einem Fahrzeug von einer nebengeordneten Straße in eine Vorfahrtsstraße benutzt der Fahrer üblicherweise den oder die Rückspiegel bevor er abbiegt. Beim rechts abbiegen hat er hierbei sowohl den rechten Rückspiegel mit dem darin sichtbaren rückwärtigen Bereich als auch den Blick nach vorne rechts über den rechten Rückspiegel im Blickfeld. Für die Erfassung von Gefahren oder Verkehrsteilnehmern im linken Bereich muß er den Kopf drehen und ggfs. den linken Rückspiegel benutzen. Bei starkem Verkehr muß er hierzu häufig die Blickrichtung und die Stellung des Kopfes ändern, wobei jeweils bei dem Blick in eine Richtung die jeweils andere Seite nicht erfaßt wird. Hierbei kann es zu gefährlichen Situationen kommen.

Es ist daher Aufgabe der vorliegenden Erfindung, einen Rückspiegel mit optischer Anzeigeeinrichtung derart weiterzubilden, daß verschiedenste Bereiche rund um das Fahrzeug einfacher durch den Fahrer erfaßt werden können.

Die Lösung dieser Aufgabe erfolgt durch die Merkmale des Anspruchs 1.

Durch das Vorsehen eines Monitors, der im Rückspiegel im Sichtbereich des Fahrers angeordnet ist, läßt sich das Bild einer Kamera auf diesen Monitor übertragen. Die Kamera läßt sich auf einen Sichtbereich ausrichten, der nicht im Blickwinkel des Fahrers ist, wenn er in den Rückspiegel schaut. Hierdurch kann der Fahrer mit einem Blick in den Rückspiegel nicht nur den unmittelbar im Rückspiegel sichtbaren Bereich und den Bereich vor dem Rückspiegel, sondern auch den im Monitor im Spiegel dargestellten Bereich erfassen, ohne die Blickrichtung ändern bzw. ohne den Kopf drehen zu müssen. Bei dem Monitor wird vorzugsweise eine LCD-Anzeige verwendet und bei der Kamera vorzugsweise eine CCD-Kamera.

Gemäß einer vorteilhaften Ausgestaltung der Erfindung nach Anspruch 2 ist der Monitor im Randbereich des Spiegels bzw. der Spiegelscheibe angeordnet, um die eigentliche Funktion des Spiegels möglichst wenig zu beeinträchtigen. Dies läßt sich auch dadurch erreichen, daß der Monitor nicht in die Spiegelscheibe integriert ist, sondern unter, neben oder über der Spiegelscheibe in einer entsprechenden Ausnehmung im Spiegelgehäuse angeordnet ist.

Gemäß einer weiteren bevorzugten Ausführungsform der Erfindung nach Anspruch 3 ist die Kamera ebenfalls im Spiegelgehäuse angeordnet, wobei der Lichteinfall auf die Kamera durch eine entsprechende Öffnung im Spiegelgehäuse ermöglicht wird.

Gemäß einer weiteren vorteilhaften Ausführungsform der Erfindung nach Anspruch 4 ist die Kamera schwenkbar ausgebildet, so daß sich unterschiedliche Bereiche rund um das Fahrzeug mit der Kamera erfassen und in dem Monitor anzeigen lassen. Beim Rückwärstsfahren kann so auch der Bereich hinter dem Fahrzeug im Monitor angezeigt werden.

Gemäß einer weiteren vorteilhaften Ausgestaltung der Erfindung nach Anspruch 5 läßt sich die Blickrichtung der Kamera mittels einer im Zugriffsbereich des Fahrers angeordneten Bedienungseinrichtung verändern, so daß der Fahrer unterschiedliche Bereiche rund um das Fahrzeug im Monitor zur Anzeige bringen kann.

Gemäß einer weiteren vorteilhaften Ausgestaltung der Erfindung nach Anspruch 6 ist eine Mehrzahl von Kameras vorgesehen. Hierdurch lassen sich durch Umschalten zwischen den einzelnen Kameras ebenfalls unterschiedliche Bereich rund um das Fahrzeug im Monitor darstellen. Hierdurch erübrigt sich das Schwenken einer Kamera. Die jeweilige Kamera kann in der optimalen Position für den jeweils zu überwachenden Bereich angeordnet werden. Die Kamera für das Rückwärtsfahren ist sinnvollerweise an der Rückseite des Fahrzeugs anzubringen.

Sind zusätzlich auch eine Mehrzahl von Monitoren vorhanden - Anspruch 7 -, erübrigt sich unter Umständen ein Umschalten, da eine Kamera jeweils einem Monitor zugeordnet werden kann. Zusätzlich lassen sich auf verschiedenen Monitoren und insbesondere in unterschiedlichen Darstellungsbereichen in einem Monitor zusätzliche Daten, wie Temperatur, Geschwindigkeit, Abstand nach hinten, nach vorne oder zur Seite, etc. einblenden. Die unterschiedlichen Darstellungsbereiche eines Monitors sollen auch so verstanden werden, dass auf dem Monitor unterschiedliche Anzeigen mittels Bild-in-Bild-Darstellung anzeigbar sind.

Gemäß einer weiteren bevorzugten Ausführungsform nach Anspruch 8 umfaßt der Rückspiegel einen ersten und einen zweiten Monitor. Der erste Monitor ist mit einer Kamera in dem fraglichen Rückspiegel verbunden und der zweite Monitor ist mit einer Kamera im anderen seitlichen Rückspiegel eines Fahrzeugs verbunden. Auch hierdurch läßt sich mit einem Blick ein größerer Bereich rund um das Fahrzeug erfassen.

Durch eine Bild- und Datenspeichervorrichtung - Anspruch 9 und 10 - läßt sich auf einfache Weise eine Black-Box-Funktion verwerklich. Hierzu werden fortlaufend, z. B. die letzten fünf Minuten, die Bilder einer oder mehrerer Kameras aufgezeichnet. Zusätzlich können noch Daten, wie Temperatur, Wetterdaten allgemeine, Uhrzeit, Datum, Geschwindigkeit, etc. mitaufgezeichnet werden. Hierdurch läßt sich ein Unfallhergang leicht rekonstruieren.

Gemäß Anspruch 11 ist die Bildebene des oder der Monitore gegenüber der Spiegelebene gekippt. Hierdurch wird vermieden, dass sich im Monitorglas die gleichen Dinge spiegeln wie im eigentlichen Spiegel.

Durch einen Digitalzoom bzw. durch die digitale Wahl eines Bildausschnitts - Anspruch 12 - läßt sich eine ähnliche Funktion realisieren, wie das Schwenken einer Kamera.

Gemäß einer weiteren bevorzugten Ausführungsform - Ansprüche 13 bis 16 ist der Monitor so ausgestaltet bzw. so in den Spiegel integriert, dass der Monitor bzw. die Monitorfläche in ausgeschaltetem Zustand nicht oder zumindest kaum sichtbar ist. Dies läßt sich z.B. dadurch erreichen, dass die Monitoroberfläche teilverspiegelt ist oder dadurch, dass der Monitor hinter der Spiegelscheibe angeordnet ist und der Bereich der Spiegelscheibe, hinter dem der Monitor angeordnet ist ebenfalls nur teil- oder halbverspiegelt ist. Hierzu wird die Spiegelschicht der Spiegelscheibe in einem Bereich vor dem Monitor zumindest teilweise entfernt, um eine örtlich höhere Durchlässigkeit der Spiegelscheibe zu erzielen. Diese Entfernung der Spiegelschicht kann beispielsweise in Form von dünnen, zueinander im wesentlichen parallelen Streifen oder in Form von kleinen einzelnen Punkten erfolgen. Wird die Spiegelschicht auf diese Weise teilweise oder partiell entfernt, wird das Rückspiegelvermögen des Rückspiegels nur unwesentlich eingeschränkt, jedoch eine deutlich höhere örtliche Durchlässigkeit der Spiegelscheibe erzielt, so dass der Monitor im aktivierten Zustand sichtbar und im nicht aktivierten Zustand nahezu unsichtbar ist. Die Entfernung der Spiegelschicht kann beispielsweise über einen Laser, einen Ätz- oder einen Ritzvorgang oder auch eine entsprechende Maskierung beim Aufbringen der Spiegelschicht erfolgen.

Weitere Einzelheiten, Merkmale und Vorteile der Erfindung ergeben sich aus der nachfolgenden Beschreibung bevorzugter Ausführungsformen anhand der Zeichnung.

Es zeigt:
- Fig. 1: eine Schnittansicht einer ersten Ausführungsform der Erfindung,
- Fig. 2: eine Aufsicht auf einen Spiegel gemäß der ersten Ausführungsform,
- Fig. 3: eine schematische Darstellung einer zweiten Ausführungsform der Erfindung,
- Fig. 4: eine Seitenansicht einer dritten Ausführungsform der Erfindung,
- Fig. 5: eine Aufsicht auf den Spiegel gemäß der dritten Ausführungsform und
- Fig. 6: eine schematische Darstellung einer vierten Ausführungsform der Erfindung.

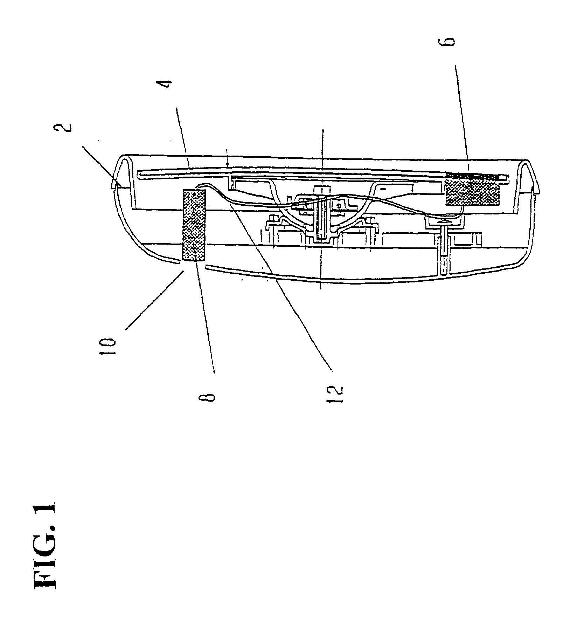

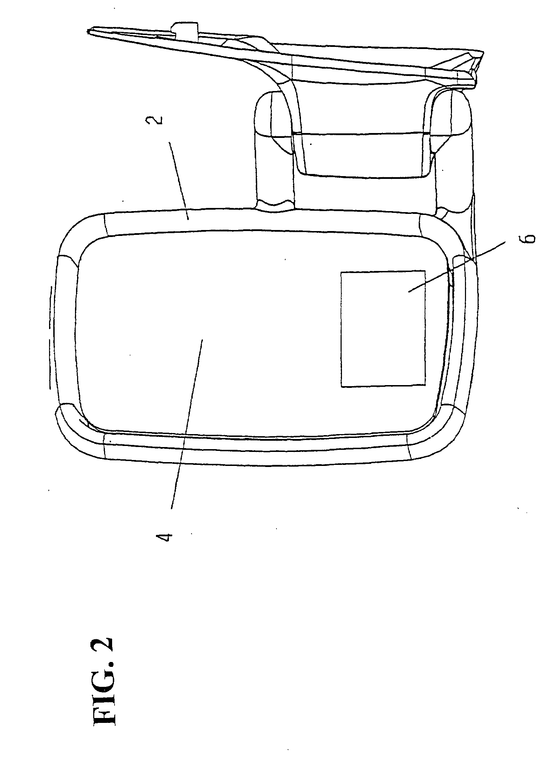

Fig. 1 und 2 zeigen eine erste Ausführungsform eines erfindungsgemäßen Rückspiegels. Der Rückspiegel umfaßt ein Spiegelgehäuse 2, eine in dem Spiegelgehäuse 2 angeordnete Spiegelscheibe 4, die verstellbar in dem Spiegelgehäuse gelagert ist und eine in die Spiegelfläche integrierte optische Anzeigeeinrichtung in Form eines Monitors 6. Ebenfalls in das Spiegelgehäuse 2 integriert ist eine Kamera, insbesondere eine CCD-Kamera 8, die durch eine Öffnung 10 nach vorne in Fahrtrichtung blickt. Über ein Kabel 12 ist der Monitor 6 mit der Kamera 8 verbunden. Hierbei ist die Kamera 8 in dem Spiegelgehäuse 2 im Falle eines linken Rückspiegels vorzugsweise schräg nach vorne rechts ausgerichtet, weil dadurch ein Bereich erfaßt wird, der üblicherweise nicht im Blickwinkel des Fahrers ist, wenn er in den linken Rückspiegel schaut.

Der Monitor 6 ist als LCD-Anzeige in die Spiegelscheibe 4 integriert, wobei die Oberfläche der LCD-Anzeige halberverspiegelt ist, so dass der Monitor 6 in ausgeschaltetem Zustand der LCD-Anzeige nahezu nicht sichtbar ist. Alternativ kann der Monitor 6 auch hinter der Spiegelscheibe 4 angeordnet sein, die dann im Bereich des Monitors 6 halbverspiegelt ist, so dass die Anzeige des Monitors im aktivierten Zustand sichtbar und der Monitor in ausgeschaltetem Zustand nahezu unsichtbar ist.

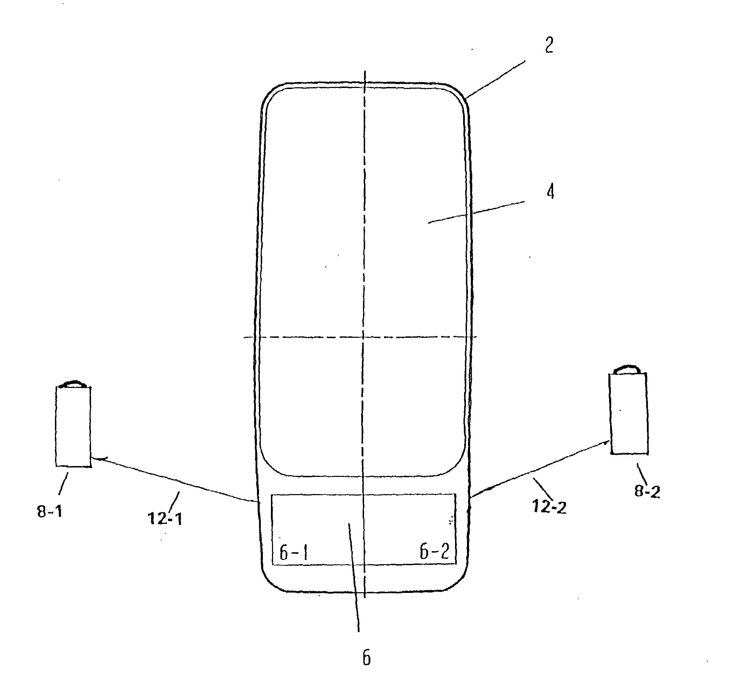

Fig. 3 zeigt schematisch eine zweite Ausführungsform der Erfindung, die eine erste Kamera 8-1 und eine zweite Kamera 8-2 sowie einen Monitor 6 mit einem linken Darstellungsbereich 6-1 und einem rechten Darstellungsbereich 6-2 umfaßt. Wie durch Kabel 12-1 und 12-2 angedeutet ist, ist die erste Kamera 8-1 mit dem linken Darstellungsbereich 6-1 und die zweite Kamera 8-2 mit dem rechten Darstellungsbereich 6-2 verbunden. Im Gegensatz zur ersten Ausführungsform ist der Monitor nicht in die Spiegelseite 4 integriert, sondern darunter im Spiegelgehäuse 2 angeordnet.

Die erste Kamera 8-1 erfaßt vorzugsweise einen Bereich rechts vor dem Fahrzeug und bringt ihn im rechten Darstellungsbereich 6-1 zur Anzeige. Die zweite Kamera 8-2 erfaßt vorzugsweise einen Bereich im linken Bereich vor dem Fahrzeug und bringt ihn im linken Darstellungsbereich 6-2 zur Anzeige.

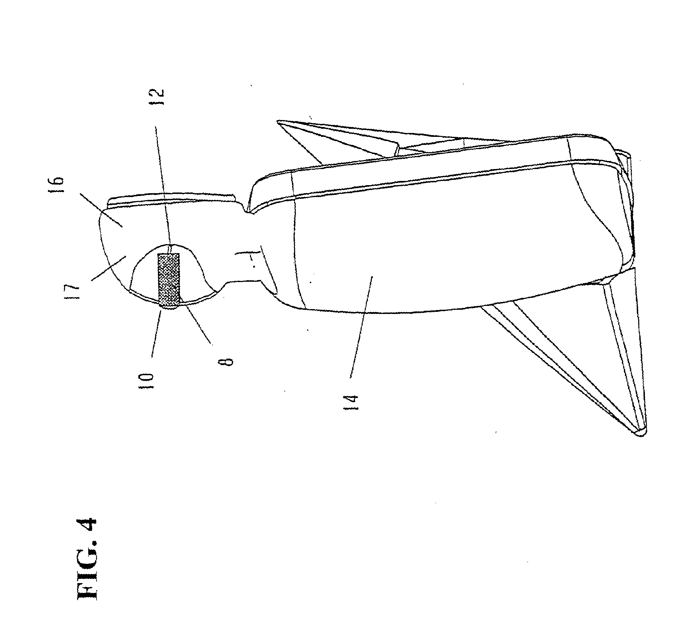

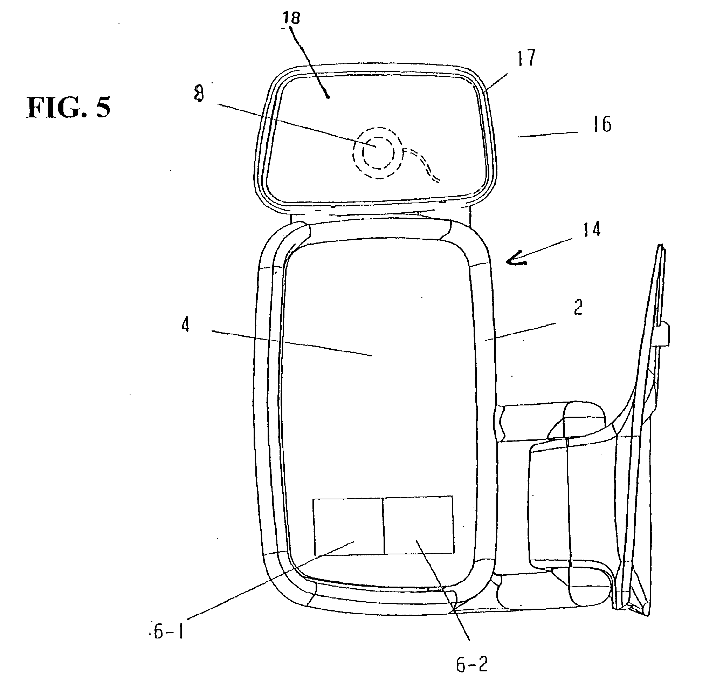

Fig. 4 und 5 zeigen eine dritte Ausführungsform der Erfindung, bei der es sich um eine Variante der zweiten Ausführungsform handelt. Der Rückspiegel gemäß der dritten Ausführungform umfaßt einen Hauptspiegel 14 mit Spiegelscheibe 4 und einen auf den Hauptspiegel 14 aufgesetzten Zusatzsspiegel 16, der ein Zusatzspiegelgehäuse 17 und eine Zusatzspiegelscheibe 18 umfaßt. Eine erste Kamera 8 ist im Zusatzspiegelgehäuse 17 angeordnet des linken seitlichen Rückspiegels angeordnet und ist durch eine Öffnung 10 in Fahrtrichtung gerichtet. Eine zweite Kamera ist im nicht näher dargestellten rechten, seitlichen Rückspiegel angeordnet. Im unteren Bereich der Spiegelscheibe 4 des Hauptspiegels 14 ist ein Monitor 6 mit einem linken und einem rechten Darstellungsbereich vorgesehen. Über ein Kabel 12 ist die erste Kamera 8 mit dem linken Darstellungsbereich 6-1 und die nicht näher dargestellte zweite Kamera im rechten Rückspiegel mit dem rechten Darstellungsbereich 6-2 im linken Rückspiegel verbunden.

Die Anordnung des Monitors 6 erfolgt wie bei der Ausführungsform nach Fig. 1 und 2, so dass die beiden Darstellungsbereiche 6-1 und 6-2 des Monitors 6 ebenfalls in ausgeschaltetem Zustand nahezu unsichtbar sind.

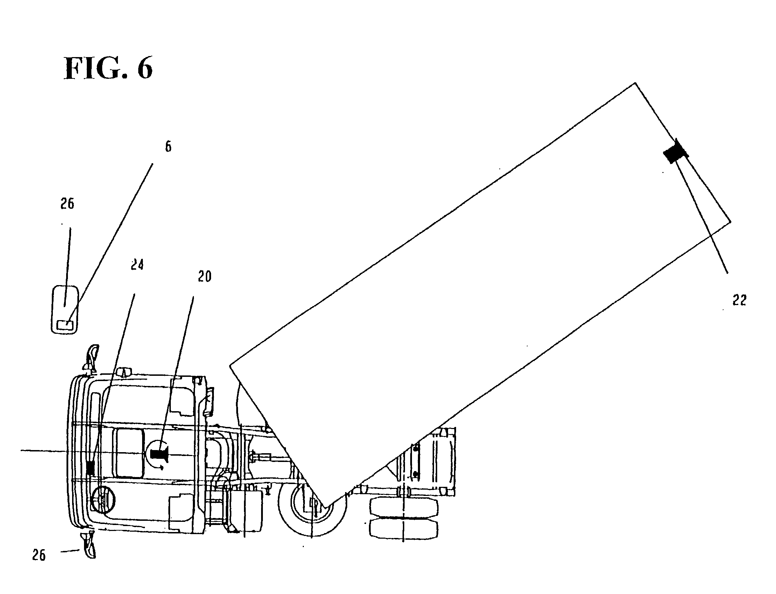

Fig. 6 zeigt eine vierte Ausführungsform der Erfindung mit einer vorderen schwenkbaren Kamera 20, die auf der Oberseite des Dachs eines Lastzuges angeordnet ist und einer rückwertigen Kamera 22, die am Anhänger des Lastzugs nach rückwärts blickend angeordnet ist. In einem linken, seitlichen Rückspiegel 26 ist der Monitor 6 angeordnet, der sich mittels einer Bedienungseinrichtung 24 wahlweise mit der vorderen schwenkbaren Kamera 20 oder mit der rückwertigen Kamera 22 verbinden läßt. Die schwenkbare Kamera 20 läßt sich über die Bedienungseinrichtung 24 schwenken, wodurch sich der Blickwinkel der Kamera 20 und der erfaßte Bereich ändern läßt.

Beim rückwärts Fahren läßt sich durch entsprechendes Umschalten mittels der Bedieneinrichtung 24 das Bild der rückwärtigen Kamera 22 auf den Monitor 6 schalten, so daß im linken Rückspiegel 26 das Blickfeld der rückwärtigen Kamera 22 dargestellt ist. Bei Bedarf kann der Fahrer dann über die Bedienungseinrichtung 24 das Blickfeld der vorderen Kamera 20 auf den Monitor 6 schalten.

Die vierte Ausführungsform gemäß Fig. 6 läßt sich dadurch modifizieren, dass wie bei der zweiten und dritten Ausführungsform zwei Darstellungsbereiche oder zwei Monitore für die zwei Kameras vorgesehen werden.

### Bezugszeichenliste:

- 2: Spiegelgehäuse
- 4: Spiegelscheibe
- 6: Monitor
- 6-1: linker Darstellungsbereich
- 6-2: rechter Darstellungsbereich
- 8: Kamera
- 8-1: erste Kamera
- 8-2: zweite Kamera
- 10: Öffnung im Spiegelgehäuse
- 12: Kabel
- 12-1: linkes Kabel
- 12-2: rechtes Kabel
- 14: Hauptspiegel
- 16: Zusatzspiegel
- 17: Zusatzspiegelgehäuse
- 18: Zusatzspiegelscheibe
- 20: vordere, schwenkbare Kamera
- 22: rückwertige Kamera
- 24: Bedienungseinrichtung
- 26: linker, seitlicher Rückspiegel

## Patentansprüche

1. Rückspiegel für Fahrzeuge, insbesondere für Nutzfahrzeuge, mit einem Spiegelgehäuse (2), einer Spiegelscheibe (4) und einer optischen Anzeigeeinrichtung (6) im Blickfeld des Fahrers, **dadurch gekennzeichnet, dass** die optische Anzeigeeinrichtung ein Monitor (6) ist, der im Rückspiegel angeordnet und mit einer Kamera (8; 20, 22) verbunden ist, die einen Sichtbereich vor, seitlich und/oder hinter dem Fahrzeug erfaßt.

2. Rückspiegel nach Anspruch 1, **dadurch gekennzeichnet, dass** der Monitor (6) im Bereich der Spiegelscheibe (4), insbesondere im Randbereich der Spiegelscheibe (4) angeordnet ist.

3. Rückspiegel nach Anspruch 1 oder 2, **dadurch gekennzeichnet, dass** die Kamera (8) im Spiegelgehäuse angeordnet ist.

4. Rückspiegel nach einem der vorhergehenden Ansprüche, **dadurch gekennzeichnet, dass** die Kamera (22) schwenkbar ist.

5. Rückspiegel nach Anspruch 4, **gekennzeichnet durch** eine Bedienungseinrichtung (24) im Bereich des Fahrers zum Schwenken und Verändern der Blickrichtung der Kamera (20).

6. Rückspiegel nach einem der vorhergehenden Ansprüche, **dadurch gekennzeichnet, dass** eine Mehrzahl von Kameras (8-1, 8-2; 20, 22) vorgesehen ist.

7. Rückspiegel nach einem der vorhergehenden Ansprüche, **dadurch gekennzeichnet, dass** eine Mehrzahl von Monitoren (6) vorgesehen sind oder dass der Monitor (6) unterschiedliche Darstellungsbereiche (6-1, 6-2) aufweist.

8. Rückspiegel nach Anspruch 6 oder 7, **dadurch gekennzeichnet, dass** eine erste Kamera (8-1) den Bereich vor dem Rückspiegel erfaßt und in einem ersten Darstellungsbereich (6-1) oder einem ersten Monitor anzeigt, und dass eine zweite Kamera (8-2) den Bereich vor einem Rückspiegel auf der anderen Fahrzeugseite erfaßt und in einem zweiten Darstellungsbereich (6-2) oder einem zweiten Monitor anzeigt.

9. Rückspiegel nach einem der vorhergehenden Ansprüche, **dadurch gekennzeichnet, dass** eine Bild- und Datenspeichereinrichtung zum Aufzeichnen von Bildern von wenigstens einer der Kameras.

10. Rückspiegel nach Anspruch 9, **dadurch gekennzeichnet, dass** in der Bild- und Datenspeichereinrichtung zu den Bildern Daten, wie Fahrzeugeschwindigkeit, Temperatur, Datum, usw. aufgezeichnet werden.

11. Rückspiegel nach einem der vorhergehenden Ansprüche, **dadurch gekennzeichnet, dass** die Spiegelebene der Spiegelscheibe (4) gegenüber der Bildebene des wenigstens einen Monitors gekippt ist.

12. Rückspiegel nach einem der vorhergehenden Ansprüche, **gekennzeichnet durch** eine Einrichtung für Digitalzoom bzw. für die digitale Wahl eines Bildabschnitts zur Anzeige auf wenigstens einem der Monitore.

13. Rückspiegel nach einem der vorhergehenden Ansprüche, **dadurch gekennzeichnet, dass** der wenigstens eine Monitor in ausgeschaltetem Zustand nicht sichtbar ist.

14. Rückspiegel nach Anspruch 13, **dadurch gekennzeichnet, dass** die Spiegelscheibe (4) im Bereich des wenigstens einen Monitors (6) halbverspiegelt ist.

15. Rückspiegel nach Anspruch 13, **dadurch gekennzeichnet, dass** die Spiegelschicht der Spiegelscheibe (4) im Bereich des wenigstens einen Monitors (6) teilweise, insbesondere punkt- oder streifenförmig, entfernt ist.

16. Rückspiegel nach Anspruch 13, **dadurch gekennzeichnet, dass** die Spiegelschicht der Spiegelscheibe (4) im Bereich des wenigstens einen Monitors (6) verdünnt ist.
